# EUROPÄISCHE PATENTSCHRIFT

(11) **EP 3 314 033 B1**
(45) Veröffentlichungstag und Bekanntmachung des Hinweises auf die Patenterteilung: **05.06.2019**
(21) Anmeldenummer: 17746483.1
(22) Anmeldetag: 02.08.2017
(51) Int. Cl.: C23C 4/08, C23C 4/129, C22C 38/42, C22C 38/44, C22C 38/52, C22C 38/54, B23K 26/144, B23K 26/342, B23K 103/04

(54) **EISENBASIERTE LEGIERUNG ZUR HERSTELLUNG THERMISCH AUFGEBRACHTER VERSCHLEISSSCHUTZSCHICHTEN**
IRON-BASED ALLOY FOR THE MANUFACTURE OF THERMALLY SPRAYED WEAR RESISTANT COATINGS
ALLIAGE FERREUX DESTINÉ À LA RÉALISATION DE COUCHES PROTECTRICES ANTI-USURE APPLIQUÉES PAR VOIE THERMIQUE

(30) Priorität: 05.08.2016 DE 102016114533
(43) Veröffentlichungstag der Anmeldung: 02.05.2018
(73) Patentinhaber: Flowserve Flow Control GmbH, 76275 Ettlingen (DE)
(72) Erfinder: MÖHWALD, Kai, 59399 Olfen (DE); TIGGEMANN, Felix, 76228 Karlsruhe (DE)
(74) Vertreter: Andrejewski - Honke Patent- und Rechtsanwälte Partnerschaft mbB
(86) Internationale Anmeldenummer: PCT/EP2017/069504
(87) Internationale Veröffentlichungsnummer: WO 2018/024763

(56) Entgegenhaltungen:
- EP-A1- 1 352 980
- EP-A2- 1 997 921
- DE-A1- 2 239 211
- JP-A- H11 293 410

## Beschreibung

Die Erfindung betrifft eine eisenbasierte Legierung zur Herstellung thermisch aufgebrachter Verschleißschutzschichten. Bei den thermisch aufgebrachten Verschleißschutzschichten kann es sich um thermisch gespritzte Verschleißschutzschichten oder Verschleißschutzschichten handeln, die im Laserpulverauftragsschweißverfahren hergestellt werden.

Thermisch gespritzte Verschleißschutzschichten werden durch sogenanntes thermisches Spritzen derart hergestellt, dass hierbei die zugeführte Legierung bzw. allgemein das Spritzmaterial unter Wärme an- bzw. aufgeschmolzen und das sich im plastischen Zustand befindliche Spritzmaterial in Teilchenform gegen eine zu beschichtende Oberfläche geschleudert wird. Die aufgeheizten und plastifizierten Teilchen treffen auf die zu beschichtende Oberfläche und werden dort angebunden bzw. mechanisch verklammert. Dazu greift man in der Praxis auf thermische Beschichtungsbrenner zurück, die das Beschichtungsmaterial erwärmen und mittels eines Gasstrahls zum Bauteil transportieren. Es können auch Spritzpistolen zum Einsatz kommen, welche sowohl für das Erhitzen der Legierung als auch den Ausstoß der plastischen Legierung in Teilchenform eingesetzt werden.

Die Zufuhr von Spritzmaterial kann grundsätzlich in der Weise erfolgen, dass das Spritzmaterial bzw. die eisenbasierte Legierung im Beispielfall in Pulverform zugeführt wird bzw. als Pulver gefördert und durch den Beschichtungsbrenner gegen die zu beschichtende Oberfläche geschleudert wird. Mit Hilfe eines Trägergases lässt sich das Pulver aufnehmen und zur zu beschichtenden Oberfläche transportieren. Alternativ hierzu kann als Spritzmaterial aber auch ein Materialstab oder Draht aus der eisenbasierten Legierung eingesetzt werden, welcher innerhalb der Spritzpistole bzw. Beschichtungspistole zum Schmelzen und mit Hilfe eines Gasstrahls in Teilchenform gegen die zu beschichtende Oberfläche geschleudert wird.

Der oftmals eingesetzte Beschichtungsbrenner bzw. die Beschichtungspistole sorgt in diesem Zusammenhang sowohl dafür, dass das Spritzmaterial erhitzt wird als auch dafür, dass die erzeugten Teilchen gegen die zu beschichtende Oberfläche geschleudert werden. Sofern an dieser Stelle ein Stab oder Draht als Spritzmaterial eingesetzt wird, liegt die eisenbasierte Legierung in Pulverform vor und wird beispielsweise mit Hilfe eines Bindemittels in die Stabform gebracht. Beim Aufschmelzen zersetzt sich das Bindemittel, so dass lediglich die Bestandteile der eisenbasierten Legierung auf der zu beschichtenden Oberfläche ankommen und sich dort als Verschleißschutzschicht in gewünschter Weise niederschlagen. Das heißt, die zu beschichtende Oberfläche wird mit der Legierung verschleißschutzschichtbildend ausgerüstet.

Das Spritzmaterial und folglich die eisenbasierte Legierung im Rahmen der Erfindung kann nicht nur pulver- oder stab- sowie drahtförmig vorliegen, wie dies bereits beschrieben wurde. Sondern es ist grundsätzlich auch möglich, mit einem schnurförmigen Beschichtungsmaterial zu arbeiten. Allgemein geht es darum, dass das fragliche Spritzmaterial bzw. die eisenbasierte Legierung oder auch das Beschichtungsmaterial im Rahmen der Erfindung innerhalb und/oder außerhalb von thermischen Beschichtungsbrennern und beispielsweise der Beschichtungspistole angeschmolzen, aufgeschmolzen oder abgeschmolzen wird bzw. eine geeignete Plastifizierung erfährt. Anschließend wird das plastifizierte Spritzmaterial in Teilchenform auf die zu beschichtende Oberfläche aufgeschleudert. Die fragliche Oberfläche wird hierbei nicht aufgeschmolzen.

Das thermische Aufbringen von Verschleißschutzschichten kann alternativ auch durch ein sogenanntes Laserpulverauftragsschweißen erfolgen. Hierbei wird in der Regel die hohe Energieleistung eines Lasers genutzt, um die zu beschichtende Oberfläche mit einem von außen zugeführten metallischen Pulver metallurgisch zu verbinden. Dadurch wird die Oberflächenstruktur rekonditioniert bzw. die Oberflächenqualität verbessert und die zu beschichtende Oberfläche gegen Verschleiß und/oder Korrosion geschützt.

Beim Prozess des Laserpulverauftragsschweißens wird in der Regel ein pulverförmiger Zusatzwerkstoff bzw. die eisenbasierte Legierung im Rahmen der Erfindung mit Hilfe der Laserenergie auf die zu beschichtende Oberfläche aufgeschweißt. Hierdurch entsteht eine poren- und rissfreie Verschleißschutzschicht. Für das beschriebene Auftragsschweißen geeignete Laser sind heutzutage sogenannte Diodenlaser oder Faserlaser. Selbstverständlich können auch vorhandene oder bisher eingesetzte CO₂-Laser Verwendung finden. Meistens wird an dieser Stelle im nahen Infrarotbereich oberhalb von 800 nm bis ca. 1100 nm gearbeitet.

Eine eisenbasierte Legierung zur Herstellung thermisch gespritzter Verschleißschutzschichten wird in der US 4 822 415 bzw. der EP 0 223 202 B1 beschrieben. Die hieraus bekannte eisenbasierte Legierung zur Herstellung thermisch gespritzter Verschleißschutzschichten greift neben Eisen als Hauptbestandteil im Wesentlichen auf Chrom, Molybdän, Kupfer und Bor neben Kohlenstoff und Silizium zurück. Darüber hinaus können noch weitere Bestandteile in dem thermischen Spritzpulver bzw. der bekannten eisenbasierten Legierung vorhanden sein. Insgesamt soll auf diese Weise eine korrosions- und verschleißwiderstandsfähige Schutzschicht auf der zu beschichtenden Oberfläche geschaffen werden.

Neben solchen eisenbasierten Legierungen zur Herstellung thermisch gespritzter Verschleißschutzschichten sind in der Praxis seit langem pulverförmige Legierungen und Hartstoff zur Herstellung einer Verschleißschutzschicht durch Auftragsschweißen bekannt, die im Wesentlichen Nickel und Bor sowie zusätzlich eingelagerte Vanadiumkarbidkörner aufweisen, wie dies beispielsweise in der DE 689 27 463 T2 beschrieben wird. An dieser Stelle sorgen primär die in die nickelbasierte Matrix eingelagerten Vanadiumkarbidkörner für die gewünschte Härte der Beschichtung.

Beim weiteren Stand der Technik nach der DE 36 89 512 T2 geht es um ein thermisches Spritzpulver, welches auf Eisen als Hauptbestandteil zurückgreift. Hierdurch soll eine neue Eisenlegierungszusammensetzung bestehend aus den Hauptelementen Eisen (Fe), Chrom (Cr) und Molybdän (Mo) geschaffen werden, die sich durch eine Kombination aus Korrosionswiderstandsfestigkeit, Reibungsverschleißwiderstandsfestigkeit und Abriebwiderstandsfestigkeit auszeichnen soll. Als auf diese Weise erreichte Mikrohärte werden in den Beispielen Werte von 700 bis 800 DPH (Diamond Pyramid Hardness) für die Vickershärte angegeben. Die an dieser Stelle genannte Norm DIN 50133 ist mittlerweile in die DIN EN ISO 6507-1 übergegangen.

Im Rahmen der JP-H-11293410A wird eine eisenbasierte Legierung beschrieben, die grundsätzlich neben Eisen, Chrom und Nickel weitere Bestandteile enthält. Dadurch soll eine Beschichtung mit großer Oberflächenhärte zur Verfügung gestellt werden.

Eisenbasierte Legierungen sind gegenüber solchen nickelbasierten Legierungen mit dem grundsätzlichen Vorteil ausgerüstet, dass sie aufgrund ihrer geringeren Kosten für Praxisanwendungen zunehmend interessant werden. Allerdings sind im Hinblick auf die kombinierten Eigenschaften der Korrosionswiderstandsfähigkeit und auch der erreichten Oberflächenhärte noch Verbesserungen gegenüber dem Stand der Technik nach der US 4,822,415 B1 bzw. der EP 0 223 202 B1 erforderlich, um die Einsatzgebiete zu vergrößern. Hier setzt die Erfindung ein.

Der Erfindung liegt das technische Problem zugrunde, eine derartige eisenbasierte Legierung zur Herstellung thermisch aufgebrachter Verschleißschutzschichten so weiter zu entwickeln, dass insbesondere die erreichbare Oberflächenhärte und die Korrosionswiderstandsfähigkeit der hieraus hergestellten Verschleißschutzschicht gegenüber bisherigen Ausführungsformen gesteigert sind, und zwar unter gleichzeitiger Verbesserung der Verschleiß- und Abriebswiderstandsfähigkeit.

Zur Lösung dieser technischen Problemstellung schlägt die Erfindung eine eisenbasierte Legierung nach Anspruch 1 vor. Außerdem ist Gegenstand der Erfindung ein Verfahren zur Herstellung einer thermisch aufgebrachten Verschleißschutzschicht auf einem Substrat nach Anspruch 5 oder nach Anspruch 8.

Die fragliche thermisch aufgebrachte Verschleißschutzschicht kann dabei durch thermisches Spritzen mit anschließender Sinterbehandlung im thixotropen Bereich erzeugt werden. Alternativ kann auch ein Laserpulverauftragsschweißen (laser cladding) vorgenommen werden. Für den Fall des thermischen Spritzens mit anschließender Sinterbehandlung wird die Sinterbehandlung vorzugsweise im thixotropen Bereich durchgeführt. Das heißt, in diesem Fall liegen 5 M% bis 80 M% der Legierung in der Schmelze vor.

Im Rahmen einer bevorzugten Variante beträgt der Anteil an Bor (B) zwischen 2 und 5 M%. Für den Anteil von Kohlenstoff (C) in der erfindungsgemäßen eisenbasierten Legierung wird vorteilhaft ein Wert von 0,4 M% bis 2,0 M% angegeben.

Die zuvor beschriebene erfindungsgemäße eisenbasierte Legierung kann in Pulverform durch das zuvor bereits beschriebene thermische Spritzen und speziell Flammspritzen sowie vorzugsweise Hochgeschwindigkeitsflammspritzen (HVOF) auf die zu beschichtende Oberfläche aufgebracht werden. Eine andere Möglichkeit besteht darin, die genannten eisenbasierte Legierung durch das bereits beschriebene Laserpulverauftragsschweißverfahren (laser cladding) auf die zu beschichtende Oberfläche aufzubringen. Hierbei wird ein lokales Schmelzbad auf der betreffenden Oberfläche bzw. Grundmaterialoberfläche erzeugt. Gleichzeitig wird in dieses Schmelzbad die eisenbasierte Legierung zugeführt, um den gewünschten Schichtaufbau herzustellen.

Sofern in diesem Zusammenhang mit einem Pulver gearbeitet wird, empfiehlt die Erfindung, dass das fragliche Legierungspulver eine Teilchengröße von weniger als 500 µm, insbesondere weniger als 300 µm, und vorzugsweise von weniger als 200 µm aufweist. Im Regelfall liegt die Teilchengröße im Bereich zwischen 10 µm und 200 µm.

Grundsätzlich kann die erfindungsgemäße eisenbasierte Legierung aber auch als Legierungsstab oder Legierungsdraht im Rahmen eines thermischen Drahtspritzprozesses bzw. eines thermischen Drahtflammspritzprozesses zur Anwendung kommen. In diesem Fall verfügt der fragliche Legierungsstab oder Legierungsdraht über einen Durchmesser bzw. eine Dicke im Bereich von ca. 1 mm bis 5 mm. Auch beim Laserauftragsschweißen kann mit einem solchen Legierungsstab bzw. Legierungsdraht gearbeitet werden.

Um das eisenbasierte Legierungspulver zu dem Stab oder Draht zu formen, wird das fragliche Pulver mit Hilfe eines organischen Bindemittels gebunden, welches beim Aufspritzen zersetzt wird. Hierbei kann es sich um Kunststoff handeln. Da in diesem Zusammenhang typischerweise Temperaturen bis zu 1500°C beobachtet werden, können übliche organische Bindemittel zum Einsatz kommen. Diese werden bereits bei wenigen 100°C zersetzt (vgl. DE 103 31 785 A1).

Die mit Hilfe der erfindungsgemäßen eisenbasierten Legierung hergestellte Verschleißschutzschicht verfügt über eine Schichtdicke im Bereich von 50 µm bis 2000 µm und mehr. Tatsächlich lassen sich sogar Verschleißschutzschichten mit einer Schichtdicke bis zu 5 mm bzw. 5000 µm oder sogar 10 mm bzw. 10000 µm realisieren. Dabei werden die beim thermischen Spritzen auf die zu beschichtende Oberfläche geschleuderten Teilchen üblicherweise mit einer Partikelgeschwindigkeit von mehr als 500 m/sec aufgetragen. Beim Laserauftragsschweißen liegen die beobachteten Partikelgeschwindigkeiten im Regelfall unterhalb von 500 m/sec. Für das Hochgeschwindigkeitsflammspritzen werden jedoch Partikelgeschwindigkeiten von mehr als 500 m/sec beobachtet. Beim üblichen Flammspritzen und auch beim Laserpulverauftragsschweißen wird an dieser Stelle mit Partikelgeschwindigkeiten von bis zu 50 m/sec gearbeitet.

Als geeignetes Basismaterial für die Beschichtung kann beispielsweise Stahl eingesetzt werden, so dass sich die fragliche eisenbasierte Legierung besonders dafür eignet, entsprechende Produkte aus Stahl hinsichtlich der Verschleiß- und Korrosionseigenschaften zu verbessern. Tatsächlich wird die fragliche eisenbasierte Legierung bei einem Auftrag durch thermisches Spritzen nach dem Auftrag auf das betreffende Substrat aus Stahl zusätzlich gesintert. Der Sintervorgang findet im thixotropen Bereich statt. Hierunter ist zu verstehen, dass die Sinterbehandlung vorzugsweise mit 5 M% bis 80 M% erreichter Schmelze der fraglichen Legierung durchgeführt wird. Außerdem erfolgt der Sintervorgang mit einer Temperatur von mehr als 1000° C und wird beispielhaft in einem Vakuumofen durchgeführt. Sofern die eisenbasierte Legierung durch ein Laserpulverauftragsschweißverfahren auf die zu beschichtende Oberfläche aufgebracht wird, ist ein solcher Sintervorgang entbehrlich.

Durch das Sintern findet eine metallurgische Anbindung der Verschleißschutzschicht durch Benetzen der Substratoberfläche mit Schmelzphasenanteilen aus dem aufgebrachten Beschichtungswerkstoff bzw. der eisenbasierten Legierung statt. Außerdem kommt es durch den nachgeschalteten Sintervorgang typischerweise zu einer Abnahme der Porosität der Verschleißschutzschicht.

Die auf diese Weise mit Hilfe der beschriebenen eisenbasierten Legierung hergestellte Verschleißschutzschicht zeichnet sich zunächst einmal durch eine besonders hohe Dichtigkeit aus, die sich anhand der erreichbaren Porosität bemessen lässt. Tatsächlich werden im Rahmen der Erfindung Werte für die Porosität beobachtet, die unterhalb von 1% angesiedelt sind. Nach dem zuvor bereits beschriebenen Sintervorgang liegt die Porosität bei deutlich weniger als 1% und ist im Regelfall sogar bei weniger als 0,5% angesiedelt. Insbesondere beobachtet man nach dem Sintervorgang sogar Porositäten unterhalb von 0,3% sowie bevorzugt bei weniger als 0,2%.

Wie üblich bezeichnet die Porosität das Verhältnis von Hohlraumvolumen zu Gesamtvolumen. Das Hohlraumvolumen stellt die Gesamtheit aller Hohlraumvolumina im Vergleich zum Gesamtvolumen dar. Entsprechende Werte lassen sich beispielsweise bei einem Schnitt durch die Beschichtung und einer elektronenmikroskopischen Aufnahme ermitteln. Jedenfalls wird anhand der erreichten Porositäten der Verschleißschutzschicht unter Rückgriff auf die erfindungsgemäße eisenbasierte Legierung deutlich, dass die Beschichtung sehr dicht ist und insgesamt über eine fein dispers verteilte Karbidstruktur verfügt. Dies ist in den selbstfließenden Eigenschaften begründet, die sich aus den Legierungselementen Bor und Silizium ergeben. Infolgedessen, kommt es zu einer besonders homogenen, porenfreien Anbindungszone zwischen dem Substrat bzw. der zu beschichtenden Oberfläche und dem Beschichtungsmaterial bzw. der eisenbasierten Legierung. Als Folge hiervon wird eine besonders hohe Korrosionsbeständigkeit sowie eine signifikant hohe Gesamthärte beobachtet.

Der selbstfließende Charakter der erfindungsgemäßen Legierung beim Sintern im thixotropen Bereich lässt sich im Kern darauf zurückführen, dass an der Oberfläche befindliche Oxide gelöst bzw. aufgebrochen werden. Hierfür sorgt bei der erfindungsgemäßen eisenbasierten Legierung primär der Bestandteil Bor (B). Tatsächlich bildet sich im Sinterprozess als chemische Reaktion mit der Substratoberfläche Borsäure, welche die Oxide auf der Oberfläche löst und somit den selbstfließenden Charakter sicherstellt.

Die hohe Gesamthärte der hergestellten Verschleißschutzschicht ergibt sich aufgrund der gemessenen Werte für die Vickershärte, die erfindungsgemäß wenigstens 800 HV_{0,3} beträgt. D. h., die Vickershärte ist in diesem Zusammenhang unter Zugrundelegung einer Prüflast von 0,3 kg bestimmt worden (vgl. zur Bestimmung die Norm DIN EN ISO 6507-1: 2005 bis -4: 2005). Dabei kann sogar eine Gesamthärte der mit Hilfe der erfindungsgemäßen eisenbasierten Legierung hergestellten Verschleißschutzschicht von mehr als 900 HV_{0,3} vorliegen. Diese Härte übersteigt diejenige von Ni-Matrix-Legierungen, wie sie in der DE 689 27 463 T2 beschrieben werden. Tatsächlich werden hier Werte von weniger als 600 HV beobachtet.

Hinsichtlich der gesteigerten Korrosionsbeständigkeit lässt sich die Korrosionswiderstandsfähigkeit durch Entfernen der Verschleißschutzschicht ermitteln. Dazu wurde die sogenannte Korrosionsrate in mm/Jahr durch Entfernen der Verschleißschutzschicht von der fraglichen Oberfläche unter Rückgriff auf eine Säurelösung ermittelt. Beispielsweise ist eine 10%ige Lösung aus Salzsäure (HCl) bei 25 °C bzw. Raumtemperatur und unter Berücksichtigung einer Einwirkzeit von bis zu 3 Stunden zugrunde gelegt worden. Dabei wurden Korrosionsraten von weniger als 50 mm/Jahr und insbesondere sogar von weniger als 30 mm/Jahr und vorzugsweise von weniger als 2 mm/Jahr festgestellt, so dass von einer außerordentlich guten Korrosionsbeständigkeit gesprochen werden kann. Vergleichbare Ergebnisse lassen sich auch bei der Verarbeitung der beschriebenen eisenbasierten Legierung für den Fall beobachten, dass diese durch ein Laserauftragsschweißen auf die zu beschichtende Oberfläche aufgebracht wird.

Vergleicht man die erfindungsgemäß erreichten Korrosionsraten von weniger als 50 mm/Jahr und insbesondere weniger als 30 mm/Jahr, vorzugsweise von weniger als 2 mm/Jahr mit dem beispielsweise in der Tabelle 2 für die Legierungen Nr. 1 und 2 angegebenen Werten im Rahmen der DE 36 89 512 T2, so fällt auf, dass im Stand der Technik erheblich höhere Korrosionsraten beobachtet werden und die Härte der auf diese Weise realisierten Verschleißschutzschicht mit 700 bis 800 HV unterhalb der Vickershärten angesiedelt ist, die mit der erfindungsgemäßen eisenbasierten Legierung erreicht werden. Denn hier werden Vickershärten der hergestellten Verschleißschutzsicht von mehr als 800 HV_{0,3} und insbesondere sogar von mehr als 900 HV_{0,3} beobachtet. Die Steigerung der erreichten Oberflächenhärte der Verschleißschutzschicht bei gleichzeitig erheblich höherer Korrosionswiderstandsfähigkeit bei der Erfindung im Vergleich zum Stand der Technik nach der DE 36 89 512 T2 lässt sich vermutlich darauf zurückführen, dass in der erfindungsgemäßen eisenbasierten Legierung zusätzlich die angegebenen Bestandteile an Nickel, Kobalt und Wolfram in Verbindung mit einem gesteigerten Chromanteil im Vergleich zur Zusammensetzung nach dem Beispiel 1 aus DE 36 89 512 T2 im Stand der Technik vorliegen. Außerdem ist die erfindungsgemäße Legierung trotz fehlendem Molybdän (Mo) in der Lage, die beschriebenen geringen Korrosionsraten zu erzielen.

### Ausführungsbeispiel

Es wurde eine eisenbasierte Legierung zur Herstellung einer thermisch gespritzten Verschleißschutzschicht mit den Hauptbestandteilen:
Fe 45,8 M%;
Cr 24,0 M%;
Ni 5,0 M%;
Co 5,0 M%;
Cu 5,0 M%;
W 5,0 M%;
Si 6,0 M%;
B 3,5 M% und
C 0,7 M%
bereitgestellt.

Die fragliche und vorgenannte eisenbasierte Legierung wurde als Legierungspulver mit einer Teilchengröße von weniger als 200 µm durch Flammspritzen mit Hilfe einer Pulverflammspritzpistole auf eine Stahloberfläche aufgebracht. Dabei kam im Detail eine Flammspritzpistole unter Verwendung von Argon als Trägergas zum Einsatz. Alternativ hierzu kann auch mit einer Hochgeschwindigkeitsflammspritzpistole gearbeitet werden, wie sie beispielhaft und nicht einschränkend im Patent EP 0 412 355 B1 beschrieben wird. Auf diese Weise ist auf der Stahloberfläche eine Verschleißschutzschicht in einer Schichtdicke von ca. 200 µm erzeugt worden, die größtenteils amorph ausgebildet ist.

Die gemessene Porosität war bei weniger als 0,2% angesiedelt. Dieser Wert für die Porosität hat sich nach dem Sintervorgang im thixotropen Bereich eingestellt. Grundsätzlich wird die aufgebrachte erfindungsgemäße Verschleißschutzschicht nach dem Flammspritzen/Hochgeschwindigkeitsflammspritzen in einem Vakuumofen oder Schutzgasofen bei einer Temperatur von mehr als 1000°C behandelt. Die Behandlungszeit betrug zwischen 10 Min. und 20 Min. Dadurch hat sich die angegebene Porosität von weniger als 0,2% eingestellt. Außerdem konnte eine fein dispers verteilte Karbidstruktur der Verschleißschutzschicht mit hoher Gesamthärte von ca. 900 bis 950 HV_{0,3} beobachtet werden. Die Korrosionsrate betrug im Beispielfall ca. 1 mm/Jahr.

## Patentansprüche

1. Eisenbasierte Legierung zur Herstellung thermisch aufgebrachter Verschleißschutzschichten, welche abschließend folgende Bestandteile aufweist:
Fe 24 bis 66 M%;
Cr 20 bis 30 M%;
Ni 2 bis 8 M%;
Co 3 bis 8 M%;
Cu 3 bis 9 M%;
W 2 bis 8 M% und
Si 2 bis 8 M%
sowie weniger als insgesamt 6 M% für B und/oder C.

2. Legierung nach Anspruch 1, **dadurch gekennzeichnet, dass** B zu 2 bis 5 M% vorliegt.

3. Legierung nach Anspruch 1 oder 2, **dadurch gekennzeichnet, dass** der Anteil für C im Bereich von 0,4 M% bis 2,0 M% angesiedelt ist.

4. Legierung nach einem der Ansprüche 1 bis 3, **dadurch gekennzeichnet, dass** sie in Pulverform mit einer Teilchengröße von weniger als 200 µm vorliegt.

5. Verfahren zur Herstellung einer thermisch aufgebrachten Verschleißschutzschicht auf einem Substrat, wonach eine eisenbasierte Legierung nach einem der Ansprüche 1 bis 4 auf das Substrat durch thermisches Spritzen aufgebracht wird.

6. Verfahren nach Anspruch 5, **dadurch gekennzeichnet, dass** das thermische Spritzen ein Flammspritzen und vorzugsweise Hochgeschwindigkeitsflammspritzen ist.

7. Verfahren nach Anspruch 5 oder 6, **dadurch gekennzeichnet, dass** die eisenbasierte Legierung im thixotropen Bereich gesintert wird.

8. Verfahren zur Herstellung einer thermisch aufgebrachten Verschleißschutzschicht auf einem Substrat, wonach eine eisenbasierte Legierung nach einem der Ansprüche 1 bis 4 durch Laserauftragsschweißen auf das Substrat aufgebracht wird.

9. Verfahren nach Anspruch 8, **dadurch gekennzeichnet, dass** es sich bei dem Laserauftragsschweißen um ein Laserpulverauftragsschweißen handelt.

## Claims

1. An iron-based alloy for the manufacture of thermally applied wear protection layers, which has the following finished composition:
Fe 24% to 66% by weight;
Cr 20% to 30% by weight;
Ni 2% to 8% by weight;
Co 3% to 8% by weight;
Cu 3% to 9% by weight;
W 2% to 8% by weight; and
Si 2% to 8% by weight
as well as a total of 6% by weight for B and/or C.

2. The alloy as claimed in claim 1, **characterized in that** B is present in an amount of 2% to 5% by weight.

3. The alloy as claimed in claim 1 or claim 2, **characterized in that** the proportion of C is situated in the range from 0.4% by weight to 2.0% by weight.

4. The alloy as claimed in one of claims 1 to 3, **characterized in that** it is in the form of a powder with a particle size of less than 200 µm.

5. A method for the manufacture of a thermally applied wear protection layer to a substrate, wherein an iron-based alloy as claimed in one of claims 1 to 4 is applied to the substrate by thermal spraying.

6. The method as claimed in claim 5, **characterized in that** the thermal spraying is flame spraying and preferably high velocity oxygen fuel spraying.

7. The method as claimed in claim 5 or claim 6, **characterized in that** the iron-based alloy is sintered in the thixotropic zone.

8. A method for the manufacture of a thermally applied wear protection layer to a substrate, wherein an iron-based alloy as claimed in one of claims 1 to 4 is applied to the substrate by laser deposit welding.

9. The method as claimed in claim 8, **characterized in that** the laser deposit welding is laser cladding.

## Revendications

1. Alliage à base de fer qui est destiné à fabriquer des couches anti-usure appliquées thermiquement et qui comporte, en son état final, les constituants suivants :
Fe 24 à 66 % en poids ;
Cr 20 à 30 % en poids ;
Ni 2 à 8 % en poids ;
Co 3 à 8 % en poids ;
Cu 3 à 9 % en poids ;
W 2 à 8 % en poids, et
Si 2 à 8 % en poids ;
ainsi que moins de 6 % en poids, au total, pour B et/ou C.

2. Alliage selon la revendication 1, **caractérisé en ce que** B est présent à 2 à 5 % en poids.

3. Alliage selon la revendication 1 ou 2, **caractérisé en ce que**, pour C, la proportion est comprise entre 0,4 % en poids et 2,0 % en poids.

4. Alliage selon l'une des revendications 1 à 3, **caractérisé en ce qu'**il se présente sous forme d'une poudre dont la taille des particules est inférieure à 200 µm.

5. Procédé de fabrication d'une couche anti-usure appliquée thermique thermiquement sur un substrat, consistant à appliquer, par projection thermique, un alliage à base de fer selon l'une des revendications 1 à 4 sur ledit substrat.

6. Procédé selon la revendication 5, **caractérisé en ce que** ladite projection thermique est une projection par flamme et, de préférence, une projection par flamme supersonique.

7. Procédé selon les revendications 5 ou 6, **caractérisé en ce que** ledit alliage à base de fer subit un frittage dans le domaine thixotrope.

8. Procédé de fabrication d'une couche anti-usure appliquée thermiquement sur un substrat, consistant à appliquer, en mettant en oeuvre un rechargement par soudage laser, un alliage à base de fer selon l'une des revendications 1 à 4 sur ledit substrat.

9. Procédé selon la revendication 8, **caractérisé en ce que** le rechargement par soudage laser est un rechargement par soudage laser à partir d'une poudre.
